# EUROPÄISCHE PATENTANMELDUNG

(11) **EP 3 174 006 A1**
(43) Veröffentlichungstag der Anmeldung: **31.05.2017**
(21) Anmeldenummer: 15196950.8
(22) Anmeldetag: 30.11.2015
(51) Int. Cl.: G06T 7/00

(54) **VERFAHREN ZUM ERMITTELN GREIFBARER OBJEKTE MITTELS EINES VISIONSSYSTEMS**

(71) Anmelder: MULTIVAC Sepp Haggenmüller SE & Co. KG, 87787 Wolfertschwenden (DE)
(72) Erfinder: WÖRZ, Norbert, 87746 Erkheim (DE); HASCHKA, Marco, 87758 Kronburg (DE)
(74) Vertreter: Grünecker Patent- und Rechtsanwälte PartG mbB

(57) **Zusammenfassung**

Das erfindungsgemäße Verfahren zum Ermitteln von greifbaren Objekten (9) mittels eines Zuführbands (4) zum Transportieren der Objekte (9), wenigstens eines Pickers (5) zum Abnehmen einzelner Objekte (9) vom Zuführband (4), und eines Visionsystems (6) zur Erfassung der Form und Lage der Objekte (9) auf dem Zuführband (4) umfassend einen Bildverarbeitungsrechner (8) zum Erstellen von Objektdatensätzen (15) zeichnet sich dadurch aus, dass die Bearbeitung von Bildaufnahmen durch das Visionsystem (6) mittels eines 2D-Hochpassfilters und eines 2D-Tiefpassfilters zur Erzeugung von Grenzwertschatten bei sich berührenden und/oder überlappenden Objekten (9) durchgeführt wird, bevor eine BlobAnalyse zur Bildung von Objektdatensätzen (15) folgt.

## Beschreibung

Die Erfindung bezieht sich auf ein Verfahren zum Ermitteln (Detektieren) greifbarer Objekte gemäß dem Oberbegriff des Anspruchs 1.

Aus der US 5,040,056 ist eine Pickerstrasse und ein Verfahren zur Ermittlung von greifbaren sowie von nicht zu greifenden Objekten bekannt. Ein Visionsystem, umfassend eine Flächenkamera, erfasst die zufällig ankommenden und unterschiedlich orientierten Objekte auf einem Transportband. Das Visionsystem ermittelt mittels einer Binarisierung aller Pixel die Objekte und wertet Objekte, die zu klein oder zu groß sind oder die sich am Rand des Transportbands befinden, aus und sortiert diese aus. Der Steuerung der Picker werden nur die Daten der zu greifenden Objekte weitergeleitet. Nachteilig an dem offenbarten schwellenbasierten Segmentierungsverfahren ist, dass sich berührende Objekte als ein zusammenhängender Haufen bzw. Fläche erkannt wird und somit als nicht greifbar aussortiert wird.

Beim Verpacken von Würsten werden Pickerstrassen eingesetzt, die Würste von einem Transportband ergreifen und in Verpackungen einlegen. Auch hier kann es vorkommen, dass sich die Würste berühren oder teilweise übereinander liegen bzw. dass sich zu kleine oder zu große Würste auf dem Transportband befinden.

Aufgabe der Erfindung ist es, ein Verfahren für eine Pickerstrasse vorzugsweise zum Erfassen von Würsten dahingehend zu verbessern, dass auch sich berührende oder nur teilweise übereinanderliegende Würste erfasst und verpackt werden können, um weniger Objekte zu erhalten, die innerhalb der Pickerstrasse nicht erfasst werden.

Diese Aufgabe wird gelöst durch Verfahren zur Erfassung greifbarer Objekte mit den Merkmalen des Anspruchs 1.

Das erfindungsgemäße Verfahren zum Erfassen von greifbaren Objekten mittels eines Zuführbands zum Transportieren der Objekte, wenigstens eines Pickers zum Abnehmen einzelner Objekte vom Zuführband und eines Visionsystems zur Erfassung der Form und Lage der Objekte auf dem Zuführband umfassend einen Bildverarbeitungsrechner zum Erstellen von Objektdatensätzen zeichnet sich dadurch aus, dass die Bearbeitung von Bildaufnahmen durch das Visionsystem mittels eines 2D-Hochpassfilters und eines 2D-Tiefpassfilters zur Erzeugung von Grenzschatten (Grenzwertschatten) bei sich berührenden und/oder überlappenden Objekten durchgeführt wird, bevor eine Blob-Analyse der gefilterten Bildaufnahmen zur Bildung von Objektdatensätzen folgt. 2D bedeutet hierbei zweidimensional entsprechend einem zweidimensionalen Bild einer Zeilenkamera, d.h. die Filterung von Pixeln in einem 2-dimensionalen Bild. BLOB-Analyse steht für Binary-Large-Object-Analyse. In der Bildverarbeitung werden zusammenhängende Flächen als BLOB bezeichnet, die sich in Eigenschaften wie beispielsweise den Helligkeitswerten gegenüber der Umgebung unterscheiden. Diese werden oftmals auch als Regionen oder Binärobjekte bezeichnet. BLOBs werden oft dazu verwendet, um Merkmale zu den bestimmten Objekten oder Pixeln zu erzeugen, beispielsweise eine Breite, eine Länge oder einen mittleren Grauwert.

Anhand der Blob-Analyse werden Objekte mit relativ zu vorgegebenen Schwellenwerten zu kleiner oder zu großer Fläche ermittelt und markiert, wobei alle Objektdatensätze an eine Pickersteuerung gesendet werden. Die Pickersteuerung führt eine erste Plausibilitätsprüfung durch, die diejenigen Objektdatensätze als nichtzugreifend markiert, bei denen eine Länge und/oder eine Breite des Objekts außerhalb eines Toleranzbereiches sind, und/oder bei denen das zu prüfende Objekt einen nicht zulässigen (z.B. zu kleinen) Abstand zu einem bereits markierten oder auch nicht markierten Objekt hat, wobei nur die nicht als nicht-zu-greifend oder als zu klein/zu groß markierten Objektdatensätze als "gute" Objekte an einen Picker weitergeleitet werden.

Die Grenzschattenerzeugung mittels der Zeilenkamera und der Filter stellt eine wesentlich kostengünstigere Ausführung dar als eine 3D-Kamera mit einer Steuerung mit viel höherer Rechenleistung. Durch die Grenzschattenerzeugung können sich berührende und teilweise übereinander liegende Würste erkannt bzw. unterschieden werden. Bei einer späteren Plausibilitätsprüfung werden auch die "schlechten" Würste erfasst, aber deren Objektdatensätze werden nicht an die Greifer gesendet. Unter der Menge der "guten" Würste, die u.a. auch sich berührende und überlappende Würste sind, wird unter Berücksichtigung der Pickerausführung untersucht, welche von diesen Würsten nicht greifbar sind, ohne dass die Position anderer Würste beeinflusst werden. Diese Würste werden dann auch als "schlechte" Würste deklariert. Trotzdem entsteht der Vorteil, dass eine hohe Anzahl sich berührender oder überlagernder Würste vom Picker erfasst, in einer Verpackungsmaschine eingelegt und verpackt werden können, so dass die Leistung gesteigert und der Ausschuss verringert wird. Im Unterschied zum Stand der Technik wird bei dem erfindungsgemäßen Verfahren eine Kollision des Pickers mit anderen Objekten verhindert.

Vorzugsweise umfasst das Visionsystem eine Zeilenkamera, um eine kostengünstige Konstruktion zu ermöglichen.

In einer besonders vorteilhaften Ausführung wird bei einer zweiten Plausibilitätsprüfung der Kollisionsbereich des Greifers bei der Aufnahme des Objekts mitberücksichtigt, um unerwartete bzw. nicht berechnete und damit vorkommende Kollisionen von Greiferbacken und Objekten zu verhindern.

Bevorzugt können über eine Bedienerschnittstelle z.B. einer Tiefziehverpackungsmaschine Einstellungen für eine Bildvorverarbeitung für den 2D-Hochpassfilter bzw. für den 2D-Tiefpassfilter vorgenommen werden, z.B. Schwellenwertvorgaben für einen oder beide Filter. Die Bildvorverarbeitung ist eine Bearbeitung des Pixelbildes des Visionsystems im Hinblick auf unzureichende Beleuchtung oder Zuführbandverschmutzungen, um diese ggfls. mittels einer digitalen Veränderung der Bildschärfe zu eliminieren.

Vorteilhaft ist dabei, dass der Bediener kein Fachmann für Visionsysteme und Bildverarbeitung sein muss, da beispielsweise ein Einstellparameter wie Bildschärfe allgemein verständlich ist, aber damit Einfluss auf den 2D-Tiefpassfilter und damit auf die Bildverarbeitung genommen wird.

Im Folgenden wird ein vorteilhaftes Ausführungsbeispiel der Erfindung anhand einer Zeichnung näher dargestellt. Im Einzelnen zeigen:
- Fig. 1: eine Draufsicht einer (erfindungsgemäßen) Verpackungsanlage,
- Fig. 2: eine vergrößerte Ansicht des Zuführbands der Verpackungsanlage und
- Fig. 3: ein Flussdiagramm eines erfindungsgemäßen Verfahrens.

Gleiche Komponenten sind in den Figuren durchgängig mit gleichen Bezugszeichen versehen.

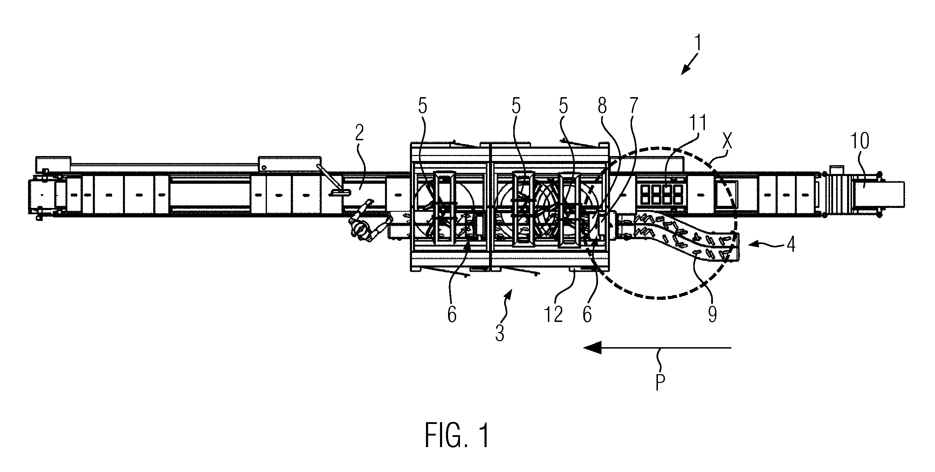

Figur 1 zeigt eine Verpackungsanlage 1 umfassend eine Tiefziehverpackungsmaschine 2, eine Pickerstrasse 3 und zwei parallel zueinander laufende Zuführbänder 4. Die Zuführbänder 4 und die Tiefziehverpackungsmaschine 2 weisen eine gemeinsame Produktionsrichtung P auf. Die Pickerstrasse 3 weist drei Picker 5 und zwei Visionsysteme 6 auf, wovon ein erstes Visionsystem 6 eine Zeilenkamera 7 und einen Bildverarbeitungsrechner 8 umfasst. Ein weiteres Visionsystem 6 ist vor dem in Produktionsrichtung P letzten Picker 5 angeordnet.

Auf den Zuführbändern 4 werden Objekte z.B. in Form von Würsten 9 in einer zufälligen Anordnung der Pickerstrasse 3 zugeführt, um von den Pickern 5 aufgenommen und in in eine Folie 10 geformte Mulden 11 eingelegt zu werden, bevor die Mulden 11 mittels einer nicht näher dargestellten Deckelfolie luftdicht verschlossen werden.

Die Pickerstrasse 3 weist eine Pickersteuerung 12 auf, die mit dem Bildbearbeitungsrechner 8 verbunden ist, und die Pickersteuerung 12 steuert die Picker 5 und ordnet jedem einzelnen Picker 5 die von diesem Picker 5 zu greifenden Objekte bzw. Würste 9 zu.

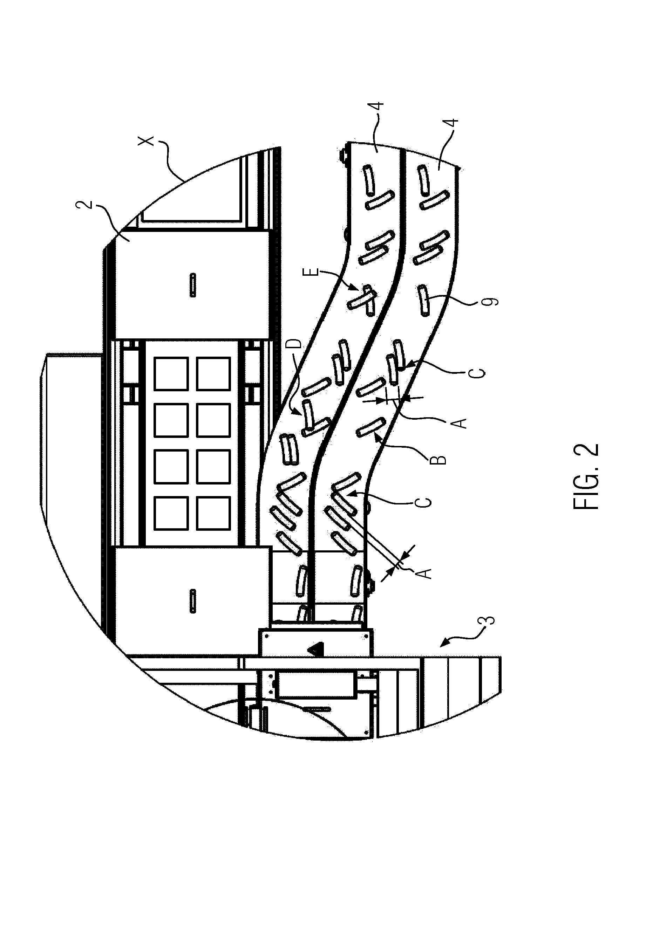

Figur 2 zeigt eine vergrößerte Ansicht X der Zuführbänder 4 der Verpackungsanlage 1 aus der Figur 1, um die Lage der Würste 9 deutlicher erkennen und beschreiben zu können. Auf den Zuführbändern 4 werden die zufällig angeordneten Würste 9 zur Pickerstrasse 3 transportiert. Dabei sind beispielsweise Würste B beabstandet zu benachbarten Würsten 9. Die Würste 9 können sich auch mit einem Ende oder mit einem Teil ihrer Seitenfläche berühren, wie beispielsweise die Würste C. Es ist des Weiteren auch eine teilweise Überlappung von Würsten D oder sogar eine komplette Überlappung von Würsten E möglich.

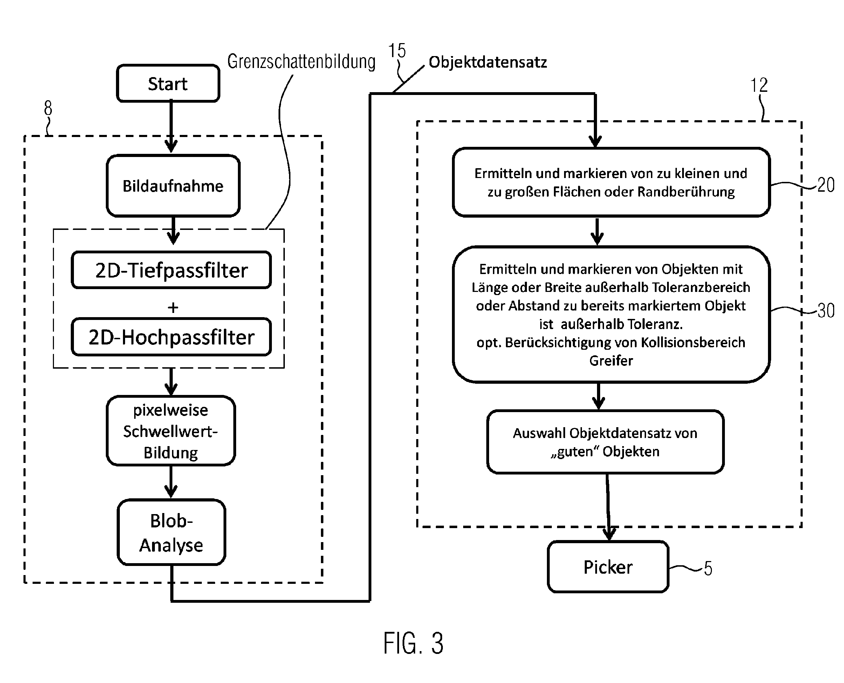

Um möglichst viele der zuvor aufgeführten Positionen bzw. Lagen von Würsten 9 zueinander im Bereich der Pickerstrasse 3 in die Tiefziehverpackungsmaschine 2 umsetzen zu können, wird ein erfindungsgemäßes Verfahren zum Erfassen von unregelmäßig bzw. ungeordnet eintreffenden, greifbaren Objekten 9, wie in Figur 3 dargestellt, näher erläutert.

Das in Figur 3 dargestellte Flussdiagramm beschreibt den Ablauf zur Ermittlung der zu greifenden und der nicht zu greifenden Objekte bzw. Würste 9. Mit dem START erzeugt die Zeilenkamera 7 Bilder, die mittels eines digitalen Bildfilters umfassend einen 2D-Hochpassfilter und einem 2D-Tiefpassfilter, wobei die Reihenfolge der Bearbeitung durch die 2D-Filter keine Rolle spielt, als Filter zur lateralen Hemmung im Bildverarbeitungsrechner 8 bearbeitet werden. Beide Filter zusammen erzeugen Grenzschatten, bei denen eine pixelweise Schwellwertbildung zur Kontrastbildung erfolgt. Die Schwellwerte können Werte von "0" bis "256" annehmen. Die von den 2D-Filtern verwendeten Schwellenwerte sind vorzugsweise im mittleren Bereich vorgesehen, beispielsweise in einem Wertebereich von "110" bis "150".

Eine nachfolgende BLOB-Analyse liefert die zusammenhängenden Flecken, die ein Objekt bzw. eine Wurst 9 darstellen.

Von allen in dieser Bildaufnahme erfassten Würsten 9 wird jeweils ein Objektdatensatz 15 erstellt, der die Lage bzw. Position und die Abmessungen bzw. die Konturdaten umfasst. Diese Objektdatensätze 15 werden satzweise vom Bildverarbeitungsrechner 8 an die Pickersteuerung 12 gesendet. Mithilfe einer Bandsynchronisierung der Zuführbänder 4 wird gewährleistet, dass den Würsten 9 jeweils ihr tatsächlicher Ort auf dem jeweiligen Zuführband 4 zugeordnet ist. Des Weiteren wird über die Bandsynchronisation sichergestellt, dass für jede Wurst 9 genau ein Objektdatensatz 15 erzeugt wird.

Anschließend werden in einer ersten Plausibilitätsprüfung 20 anhand der Objektdatensätze "schlechte" Würste 9 mit einer zu kleinen oder zu großen Fläche ermittelt und im Objektdatensatz 15 entsprechend markiert. Es können auch Würste 9, die einen Rand des Zuführbands 4 berühren, als "schlecht" ermittelt und markiert werden.

Des Weiteren werden in einer zweiten Plausibilitätsprüfung 30 nun die Abstände A zwischen benachbarten Würsten 9 ermittelt und gemäß von vorgegebenen bzw. gespeicherten Toleranzangaben verglichen und bei Abweichung in Folge auch als "schlecht" ermittelt und im Objektdatensatz 15 entsprechend markiert. Beispielsweise kann bei nebeneinander liegenden Würsten 9 die Pickergeometrie des Pickers 5 mit berücksichtigt werden, falls dieser die Wurst 9 mittels zweier nicht näher dargestellter Greiferbacken seitlich erfasst, da der Abstand A zwischen den zwei Würsten 9 im Bereich der Greiferbacken einen Mindestwert aufweisen muss, der vom Picker bzw. vom Kollisionsbereich der Greiferbacken abhängig ist.

Nach dieser zweiten Plausibilitätsprüfung 30 werden nur noch die zu greifenden Objektdatensätze 15 von der Pickersteuerung 12 zur Steuerung der Picker 5 verwendet, um die zu greifenden "guten" Würste 9 von den Zuführbändern 4 zu erfassen und in die Tiefziehverpackungsmaschine 2 einzulegen.

## Patentansprüche

1. Verfahren zum Ermitteln von greifbaren Objekten (9) mittels wenigstens eines Zuführbands (4) zum Transportieren der Objekte (9), wenigstens eines Pickers (5) zum Abnehmen einzelner Objekte (9) vom Zuführband (4), und mittels eines Visionsystems (6) zur Ermittlung von Form und Lage der Objekte (9) auf dem Zuführband (4) umfassend einen Bildverarbeitungsrechner (8) zum Erstellen von Objektdatensätzen (15), **dadurch gekennzeichnet, dass** die Bearbeitung von durch das Visionsystem (6) gewonnenen Bildaufnahmen mittels eines 2D-Hochpassfilters und eines 2D-Tiefpassfilters zur Erzeugung von Grenzschatten bei sich berührenden und/oder überlappenden Objekten (9) durchgeführt wird, bevor eine Blob-Analyse der gefilterten Bildaufnahmen zur Bildung von Objektdatensätzen (15) folgt, anhand derer Objekte (9) mit gegenüber vorgegebenen Schwellenwerten zu kleiner oder zu großer Fläche ermittelt und die ihnen zugeordneten Objektdatensätze (15) als zu klein bzw. zu groß markiert werden, wobei alle Objektdatensätze (15) an eine Pickersteuerung (12) gesendet werden und die Pickersteuerung (12) eine erste Plausibilitätsprüfung (29) durchführt, die diejenigen Objektdatensätze (15) als nicht-zu-greifend markiert, bei denen eine Länge und/oder eine Breite des Objekts (9) außerhalb eines Toleranzbereiches sind, und/oder bei denen das zu prüfende Objekt (9) einen nicht zulässigen Abstand (A) zu einem bereits markierten Objekt (9) hat, wobei nur die nicht als nicht-zu-greifend, als zu klein oder als zu groß markierten Objektdatensätze (15) als "gute" Objekte (9) an einen Picker (5) weitergeleitet werden.

2. Verfahren nach Anspruch 1, **dadurch gekennzeichnet, dass** das Visionsystem (6) eine Zeilenkamera (7) umfasst.

3. Verfahren nach einem der vorangehenden Ansprüche, **dadurch gekennzeichnet, dass** bei einer zweiten Plausibilitätsprüfung (30) ein Kollisionsbereich des Pickers (5) bei der Aufnahme des Objekts (9) mitberücksichtigt wird.

4. Verfahren nach einem der vorangehenden Ansprüche, **dadurch gekennzeichnet, dass** über eine Bedienerschnittstelle Einstellungen für eine Bildvorverarbeitung für den 2D-Hochpassfilter bzw. für den 2D-Tiefpassfilter vorgenommen werden.
